# EUROPEAN PATENT APPLICATION

(11) **EP 4 763 317 A1**
(43) Date of publication of application: **24.06.2026**
(21) Application number: 25224617.8
(22) Date of filing: 17.12.2025
(51) Int. Cl.: B01D 53/78

(54) **PLANT AND METHOD FOR TREATING AN AERIFORM EFFLUENT**

(30) Priority: 18.12.2024 IT 202400028896
(71) Applicant: Laminam SpA, 41042 Fiorano Modenese (IT); RAFT S.r.l., 50056 Montelupo Fiorentino (FI) (IT)
(72) Inventor: BONARI, Simone, Montelupo Fiorentino (FI) (IT); PEROZZI, Michele Patrizio, Fiorano Modenese (MO) (IT)
(74) Representative: Cantaluppi, Stefano

(57) **Abstract**

A plant (100) and a method (900) for treating an aeriform effluent wherein the plant (100) comprises a delivery conduit line (10) configured to transport an aeriform effluent (F) from at least one combustion station (20), to one or more processing stations arranged in succession. The plant (100) further comprising at least one cooling station (40) arranged along said delivery conduit line (10) configured to perform a cooling of the aeriform effluent to a temperature not exceeding 75°C, and a treatment station (50), arranged along said delivery conduit line (10) downstream of said cooling station (40) and comprising a first section (51) configured to perform a basification of the effluent flowing through it, and a second section (52) arranged downstream of said first section (51) and configured to perform an oxidation of the effluent flowing through it, wherein said first section (51) and said second section (52) are hydraulically independent. The plant (100) further comprises at least one adsorption station arranged along said delivery conduit line (10) downstream of said treatment station (50) and comprising at least one filter element (201) configured to perform an adsorption on the aeriform effluent passing through it.

## Description

### Technical area

The present invention relates to the field of treating aeriform fluids from industrial waste. More specifically, the invention relates to a plant and method for treating an aeriform effluent generated by a plant for the production of ceramic materials.

### Technological background

In the field of the treatment of aeriform fluids from discharges of industrial processing waste, various types of processes are known adapted to remove organic and/or inorganic contaminants from the fluids themselves, which is usually necessary prior to releasing these fluids into the atmosphere.

The term "effluent" refers to a fluid in which contaminants of an organic and/or inorganic nature are present.

The term "treatment of an aeriform effluent" refers to the process of removing at least part of the contaminants contained in an aeriform fluid from industrial processing waste.

The term "hydraulically independent" referring to a portion of a plant, such as a section or compartment in which at least one process step is carried out, is intended to indicate that for this portion there is a separation of fluid from the other elements of the plant, implemented by means of physical divisions.

With specific reference to the generation and subsequent release of an aeriform effluent from a ceramics manufacturing plant into the atmosphere, the type and quantity of pollutants it contains depend on various parameters, e.g. the raw materials used, the additives employed and the production methods applied. These emissions typically include particulate and aeriform emissions such as carbon oxides, nitrogen oxides, sulphur oxides, chlorate and chlorinated inorganic compounds, hydrochloric acid (HCl) and phosphoric acid (HF), organic compounds and heavy metals.

Additionally, in this specific production sector, the aeriform effluent treatment system should take into account the consequences of both the type of fuel used (as heavy fuel oil, for example, produces large quantities of sulphur dioxide) and the type of raw material used in the plant's processes (e.g. different types of clay may contain high percentages of carbonates, marine sediments, sulphur compounds and, in some cases, feldspar containing fluorides).

The currently most widespread treatment plants for the removal of contaminants in aeriform effluents - also known as "regenerative thermal oxidisers" (RTO) - from ceramic material production plants, allow the removal of only one pollutant, total organic carbon (TOC), but are ineffective on all the inorganic components of the flue gas (sulphur, chlorine, fluorine) and are, moreover, producers of carbon dioxide that is added to that already produced by the ceramic kiln.

The need is therefore perceived for a plant and method for treating an aeriform effluent that allows one or more of the above limits to be exceeded with reference to the prior art mentioned above.

### Description of the invention

In particular, it is the purpose of the present invention to provide a plant and a method for treating an aeriform effluent, in particular generated by a plant for the production of ceramic materials, which allows the effluent to be purified efficiently.

A further purpose of the present invention is to provide a plant for the treatment of an aeriform effluent that can be easily configured and sized according to the type of effluent to be treated, as well as being overall more economical than plants of the prior art.

It is also the purpose of the present invention to provide a plant and a method for treating an aeriform effluent, which allows the abatement of all classes of contaminants to be easily planned and regulated.

Finally, the aim of the present invention is to provide a plant for treating an aeriform effluent, which can be adapted to the chemical and physical characteristics of the aeriform effluent subjected to the purification process, both at the design stage and during operation, for example during the purification process of the effluent itself.

These and other purposes of the present invention are achieved by means of an aeriform effluent treatment plant and a corresponding treatment method incorporating the features of the appended claims, which form an integral part of the present description.

According to a first aspect, the present invention relates to a plant for treating an aeriform effluent comprising a delivery conduit line configured to transport an aeriform effluent coming from at least one combustion station to one or more processing stations arranged in succession.

Preferably, the plant comprises at least a cooling station, arranged along said delivery conduit line and configured to perform a cooling of the aeriform effluent to a temperature not exceeding 75°C.

Preferably, the plant comprises a treatment station, arranged along said delivery conduit line, downstream of said cooling station.

Preferably, said treatment station comprises a first section configured to perform a basification of the flow of effluent flowing through it.

Preferably, said treatment station comprises a second section arranged downstream of said first section and configured to perform an oxidation of the flow of effluent flowing through it.

Preferably, said first section and said second section are hydraulically independent.

Preferably, the plant comprises at least one adsorption station arranged along said delivery conduit line, downstream of said treatment station.

Preferably, said adsorption station comprises at least one filter element configured to perform an adsorption on the aeriform effluent flowing through it.

This solution makes it possible to provide a plant in which the effluent purification treatment is highly efficient and the consumption of reagents and energy is proportional to the load of pollutants to be abated, unlike systems of the prior art (e.g. thermal oxidation) where this consumption is invariant to the load.

In a second aspect thereof, the present invention relates to a method for treating an aeriform effluent comprising conveying a flow of an aeriform effluent into a cooling station trough a delivery conduit line.

Preferably, the method comprises perform at least one cooling in said cooling station, which is configured in such a way as to obtain a cooled effluent flow exiting therefrom having a temperature not exceeding 75°C.

Preferably, the method comprises perform at least one basification of the cooled effluent flow, by means of basifying agents, in a first section of a treatment station.

Preferably, the method comprises perform at least one oxidation of the effluent exiting said first section by means of oxidising agents in a second section of said treatment station.

Preferably, the second section is hydraulically independent of the first section. Preferably, the method comprises perform at least one adsorption in an adsorption station comprising at least one filter element.

According to this solution, it is possible to provide an improved aeriform effluent treatment, as it is highly purified.

The present invention may have, in at least one of the aforesaid aspects, at least one of the following preferred features, taken individually or combined with any one of the other preferred features described.

In some embodiments, said cooling station comprises at least one first heat exchanger.

Preferably, said first heat exchanger is an air heat exchanger.

Preferably, said first heat exchanger is provided with an inlet section for inlet of an aeriform service fluid having a temperature less than or equal to 40°C. Preferably, the first heat exchanger is configured to cool the aeriform effluent so as to obtain a cooled aeriform effluent outlet flow having a temperature comprised between about 40°C and about 70°C.

According to this configuration, it is possible to advantageously limit the energy consumption of the operations that will be carried out in the subsequent steps of the fluid treatment process, while avoiding the uncontrolled formation of aggressive condensates in the cooling station.

In some embodiments, the treatment station comprises at least one scrubbing tower provided with at least said first section.

In some embodiments, the scrubbing tower comprises at least a first inlet, placed in fluid connection with said first section, and suitable for the passage of a cooled effluent flow, coming from the cooling station.

Preferably, said first inlet is placed at a lower portion of the scrubbing tower.

In some embodiments, the scrubbing tower comprises at least a second inlet configured to feed a flow of water into the scrubbing tower itself.

In some embodiments, the scrubbing tower comprises at least a first outlet configured to discharge a flow of treated aeriform effluent from the scrubbing tower.

In some embodiments, said treatment station comprises at least one storage tank, arranged internally to said scrubbing tower, and placed in fluid connection with a second outlet of the scrubbing tower, configured to flow out the liquids collected in the tank and convey them into a recirculation circuit.

Preferably, said storage tank is placed at a lower portion of the scrubbing tower. In some embodiments, said recirculation circuit is configured to transport a flow comprising the liquids exiting the storage tank and a basifying solution. Preferably, the recirculation circuit is configured to convey said flow into the scrubbing tower trough a third inlet.

The plant thus configured advantageously allows for the effective treatment of the effluent, which is fed into the scrubbing tower at a lower portion of the tower itself, and flows from the bottom to the top through the entire extension of the tower, meeting the washing fluid flowing in the opposite direction.

In some embodiments, a first inlet circuit is configured to connect a first reservoir containing a basifying solution to said recirculation circuit.

According to this configuration, the mild acidity of the cooled effluent flow coming from the cooling station is advantageously reduced and the organic load still present in this flow is further reduced.

In some embodiments, the plant comprises a pH regulator, operatively connected to a pH meter and to said first reservoir, said regulator being configured to control the amount of basifying solution fed into the first section, based on the values measured by said meter.

In this way, the plant can be advantageously adapted to the characteristics of the effluent to be treated, even during the treatment process.

In some embodiments, the first section and the second section are both provided inside a scrubbing tower and are arranged in series with each other, so that the first section is placed before the second section, along the path of the effluent within the scrubbing tower itself.

In some embodiments, the plant comprises a second inlet circuit, configured to connect a second reservoir containing an oxidising solution to a fourth inlet of the scrubbing tower.

Preferably, the fourth inlet of the scrubbing tower is placed in fluid connection with the second section of the treatment station.

In some embodiments, the plant comprises a Redox potential controller, configured to control the amount of oxidising solution fed into the scrubbing tower via the second inlet circuit, to which it is operatively connected.

In this way, it is possible to adjust the alkalinity of the effluent flow resulting from the treatment in the first section of the treatment station, during the effluent treatment process.

In some embodiments, said basifying solution comprises potassium hydroxide (KOH).

Preferably, the basifying solution has a volume percentage composition of KOH between 0.5% and 8% by weight.

In some embodiments, said performing an oxidation comprises using an oxidising solution consisting of hydrogen peroxide (H₂O₂).

In some embodiments, the plant comprises a second heat exchanger, arranged downstream of the treatment station, and configured to increase the temperature of the treated fluid, i.e. at the outlet of the treatment station, by about 10°C and obtain a relative humidity of this flow comprised between 30% and 50%, preferably 40%.

This configuration advantageously allows for maximum abatement efficiency of the pollutants in the effluent flow, in the adsorption section.

In some embodiments, the first cooling station comprises a first condensate separator.

Preferably, said first condensate separator comprises an inverted cyclone and a polypropylene inertial vane type separator.

This configuration also allows operation at lower temperatures than the design temperature, as good protection against fouling and corrosion is achieved in the stations downstream of the cooling station.

### Brief description of the drawings

The invention will be described below with reference to some examples, provided for explanatory and non-limiting purposes, and illustrated in the annexed drawings. These drawings illustrate different aspects and embodiments of the present invention and reference numerals illustrating structures, components, materials and/or similar elements in different figures are indicated by similar reference numerals, where appropriate.
Figure 1 illustrates a plant schema for treating an aeriform effluent, according to an embodiment of the present invention; and

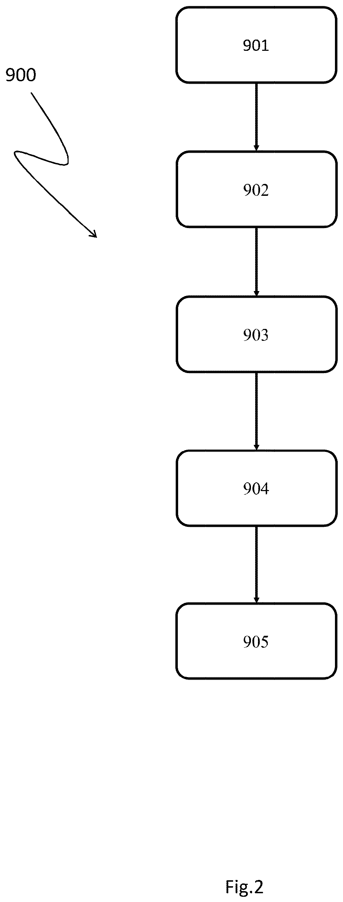

Figure 2 is a flowchart of a method for treating an aeriform effluent according to an embodiment of the present invention.

### Preferred embodiment of the invention

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The use of "for example", "etc.", "or" indicates non-exclusive alternatives without limitation unless otherwise indicated. The use of "includes" means "includes, but not limited to", unless otherwise indicated.

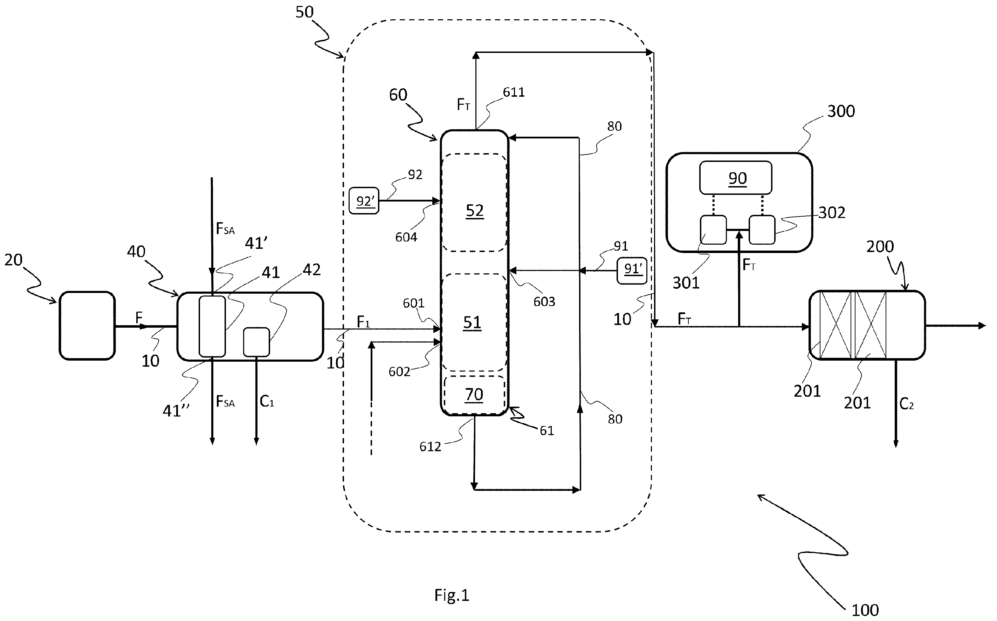

With initial reference to Figure 1, the number 100 indicates a plant 100 for treating an aeriform effluent according to the present invention, which receives an aeriform effluent flow F generated by a generic combustion station 20 belonging to said plant. Preferably, said aeriform effluent F is generated in a combustion station comprising one or more kilns for firing ceramic materials. Generally, the temperature of the aeriform effluent F from the combustion station is comprised between 180°C and 220°C.

The variation in pollutant content depends on the type of processing carried out; the values for pollutants potentially present in the effluent F can be summarised in the following table N.1.

**TABLE No.1**

| | | |
|---|---|---|
| Water vapour volume | % | 3 ≤ x ≤ 10 |
| Temperature | °C | 160 ≤ x ≤ 230 |
| Particle material | mg/Nm³ | 5 ≤ x ≤ 10 |
| Lead | mg/Nm³ | ≤ 0.001 |
| Hydrofluoric acid (HF) | mg/Nm³ | 30 ≤ x ≤ 80 |
| Hydrochloric acid (HCl) | mg/Nm³ | 20 ≤ x ≤ 130 |
| V.O.S. (as total C-org) | mg/Nm³ | 10 ≤ x ≤ 150 |
| Aldehydes | mg/Nm³ | 4 ≤ x ≤ 60 |
| of which Formaldehyde | mg/Nm³ | 4 ≤ x ≤ 30 |
| Oxygen (O₂) | % | 14 ≤ x ≤ 18 |
| Carbon monoxide (CO) | mg/Nm³ | 80 ≤ x ≤ 200 |
| Carbon dioxide (CO₂) | % | 3 |
| Nitrogen oxides (as NO₂) | mg/Nm³ | 25 ≤ x ≤ 60 |
| Sulphur oxides (as SO2) | mg/Nm³ | 40 ≤ x ≤ 300 |
| Ammonia (NH₃) | mg/Nm³ | ≤ 5 |
| PCDD-PCDF | mg/Nm³ | < 0.1 |
| Odour concentration | UO/m³ | 1,000 ≤ x ≤ 6,000 |

The plant 100 comprises a delivery conduit line 10 configured to transport an aeriform effluent F, from one or more combustion stations 20, to several processing stations forming part of the plant 100 and arranged in succession; these processing stations are traversed sequentially by the passage of the flow of the aeriform effluent F to be treated.

The plant 100 comprises a cooling station 40 - arranged along the delivery conduit line 10 - to which the aeriform effluent F from the combustion station 20 is conveyed.

Said cooling station 40 comprises at least a first heat exchanger 41 configured to perform a cooling of the aeriform effluent F flowing therein.

According to the preferred embodiment illustrated in Fig. 1, the first heat exchanger 41 is an air heat exchanger comprising an inlet section 41' and an outlet section 41", connected to each other by means of internal shell-and-tubes (not shown in the figures) through which an aeriform service fluid F_{SA} flows, suitable for cooling the aeriform effluent F, which is conveyed within the first heat exchanger 41 so as to lap said shell-and-tubes.

Preferably, the aeriform service fluid F_{SA} is ambient air having, at the inlet section 41' of the first heat exchanger 41, a temperature comprised between 10°C and 40°C, preferably about 20°C.

According to a preferred form, the first heat exchanger 41 is configured so that the temperature of the aeriform service fluid F_{SA}, measured at the outlet section 41'', is comprised between 70°C and 90°C.

In alternative embodiments, said aeriform service fluid F_{SA} can be water from a scrubbing tower or dry cooler.

The cooling station 40 is configured to cool the aeriform effluent F so as to obtain a cooled aeriform effluent flow F₁ at the outlet having a temperature not exceeding 75°C; preferably between about 40°C and about 70°C.

The cooling station 40 can also comprise a first condensate separator (42) configured to obtain a first condensate fraction (C₁).

In a preferred embodiment, the first condensate separator (42) comprises an inverted cyclone and a polypropylene inertial vane type separator (demister). Preferably the demister containment casing is connected, together with a condensate drain from said cyclone, to a reservoir designed to contain acidic condensate and equipped with a booster pump.

The plant also comprises a treatment station 50, arranged along said delivery conduit line 10, downstream of the cooling station 40 described above.

Said treatment station 50 comprises at least a first section 51 and at least a second section 52, each of which is configured to perform a specific treatment on the effluent flowing through them, according to differentiated methods.

According to the preferred embodiment illustrated in Figure 1, the first section 51 and the second section 52 are provided within a scrubbing tower 60 and are arranged in series with each other, so that the first section 51 is placed before the second section 52, along the path of the effluent within the scrubbing tower 60, which flows from a lower portion of the tower, towards a top portion thereof. In detail, the first section 51 is configured to perform a basification and the second section 52 is configured to perform an oxidation.

According to this configuration, the scrubbing tower 60 comprises a first inlet 601 through which the cooled effluent flow F₁, coming from the cooling station 40, is fed into the first section 51, and a first outlet 611, located in a top portion of the scrubbing tower 60, through which the treated effluent flow F_{T}, resulting from the processes carried out within the tower itself, flows to a subsequent processing station.

Preferably, the first inlet 601 is located in a lower portion of the scrubbing tower 60.

The scrubbing tower 60 also includes a second inlet 602, through which a flow of water, preferably from the water mains, can be fed into the tower 60 itself.

A storage tank 70 is also arranged internally to the scrubbing tower 60 at a lower portion thereof, preferably at its base 61, and is configured to contain the fluids resulting from the processes carried out within the tower, i.e. the condensates produced internally to the scrubbing tower 60 and part of the water fed therein, said fluids being conveyed into said storage tank 70 by gravity. The storage tank 70 is configured so as to be placed in fluid connection with a second outlet 612 of the scrubbing tower 60, through which it is possible to flow out the liquids collected in the tank itself, and convey them to a recirculation circuit 80 connected to said second outlet 612.

In particular, the recirculation circuit 80 is configured to convey a flow comprising the liquids exiting the storage tank 70 and a basifying solution - fed into said recirculation circuit 80 via a first inlet circuit 91 - and convey said flow into the scrubbing tower 60 trough a third inlet 603.

This first inlet circuit 91 is therefore configured to connect a first reservoir 91' containing the basifying solution, to said recirculation circuit 80.

In an embodiment not shown in the figures, the plant comprises a pH regulator, operatively connected to a pH meter and to said first reservoir 91'; this pH regulator is configured to control the amount of basifying solution inlet into the first section 51, based on the values measured by said meter.

According to a preferred embodiment, the basifying solution is an aqueous solution of KOH (potassium hydroxide), preferably with a volume percentage composition of KOH comprised between 0.5% and 5% by weight. The use of this type of solution, also known as caustic potash, advantageously avoids the common ion phenomenon due to the presence of fluorine in the effluent subjected to treatment.

In this way, the first section 51 is configured to obtain a flow of partially de-acidified effluent, which is conveyed to the second section 52.

A fourth inlet 604 of the scrubbing tower 60, placed above both the first 601, the second 602 and the third inlet 603, is provided to allow an oxidising solution to enter the tower 60 itself in the second section 52.

This oxidising solution is transported to the fourth inlet 604 via a second inlet circuit 92, which connects a second tank 92' containing the oxidising solution, to said fourth inlet 604.

According to a preferred embodiment, the oxidising solution consists of hydrogen peroxide (H₂O₂).

The treatment station 50 also comprises a Redox potential regulator (not shown in the figures), configured to control the amount of oxidising solution fed into the scrubbing tower 60, which is operatively connected to the second inlet circuit 92.

According to the invention, the first section 51 and the second section 52 are hydraulically independent, i.e., they are made separately from each other and each of them has a supply circuit dedicated solely to the respective section, so that the fluids pertaining to the two sections, as well as those in the individual section, are moved and treated separately.

Preferably, the scrubbing tower 60 is configured so that the crossing time of the first section 51 by the effluent is greater than 1 second and the crossing time of the second section 52 is greater than 2 seconds. To ensure this condition, both the first section 51 and the second section 52 are made so as to have a height of at least 1 m.

The plant 100 is preferably configured so that the scrubbing tower 60 has a maximum diameter comprised between 2 and 4 metres and a height of between approximately 5 and approximately 10 metres. According to this configuration, it is possible to treat an effluent flow F having a flow rate comprised between 1,000 m³/h and 1,500 m³/h.

The plant 100 also comprises at least one adsorption station 200 arranged along the delivery conduit line 10, downstream of the treatment station 50. This adsorption station 200 comprises at least one filter element 201 configured to perform an adsorption on the aeriform effluent.

The adsorption station 200 can be suitably configured according to both the flow rate of the aeriform effluent to be treated, and the concentration values of contaminants contained in the effluent itself, and the desired concentration limit values of contaminants present in the aeriform effluent to be released into the atmosphere. The pollutants reduced by this section are those with an organic component - generally not water-soluble - not treated in the previous sections. The average abatement efficiency of this section with regard to the above-mentioned pollutants is over 90%.

Such an adsorption station 200 may provide for the use of several filter elements 201 the number of which may be determined during the plant design phase, e.g. on the basis of the various process parameters mentioned above.

In detail, the adsorption station 200 is kept under vacuum by centrifugal fans, which ensure suitable negative pressure and flow conditions, upstream of the filter elements.

The fans and geometry of the filter elements 201 ensure uniform distribution in the filter elements 201, which are loaded - according to the needs of the pollutant load to be abated - with activated carbon or Zeolites.

Preferably, the filter elements 201 consist of cylindrical multilayer fixed-bed filters, and an inlet of the aeriform effluent is provided in a direction orthogonal to said filters, and an internal distribution system with a decreasing cross-section, e.g. toroidal in shape.

The flow of treated aeriform effluent F_{T}, exiting the treatment station 50, is conveyed into the adsorption station 200 by the vacuum applied by one or more fans (not shown in the figures), as well as by the geometry of the distribution system, and is uniformly distributed within it as it passes through the filter elements 201.

According to the invention, a variable number of cartridges comprising different filter elements 201 can be provided; this system allows high abatement yields to be achieved and offers the possibility of independently managing the replacement of the different materials, preserving their regeneration.

The crossing velocity under maximum flow conditions in filter elements 201 can vary from 0.10 m/s to 0.25 m/s, while the contact time of the effluent flow with the filter elements 201 can vary from 1 to 3 seconds (under maximum flow conditions).

Preferably, each filter element 201 is provided with an inlet, which is separated from the next one by a shaped baffle, sloping towards a discharge point of a second condensate fraction C₂; the discharge points of the second condensate fraction C₂ are then connected to a special reservoir (not shown in the figures). Preferably, the adsorbent material is loaded from the top by gravity, using suitable manholes provided at the top of the filter, while the discharge is from the bottom, again by gravity, through appropriate discharge flanges.

According to a preferred embodiment, manual adjustment shutter are provided, which advantageously allow the exclusion of one or more of the filter elements 201, in order to easily carry out maintenance work or material replacement; in these cases, the filter elements that remain operational will still guarantee effective effluent adsorption treatment.

According to an embodiment, a second heat exchanger (not shown in the figures) fed with service fluid (e.g. hot water, preferably at a temperature of about 80°C) is installed downstream of the treatment station 50 in order to carry out "post-heating", preferably of about 10°C, of the aeriform flow exiting the scrubbing tower 60 and to obtain a relative humidity of this flow comprised between 30% and 50%, preferably 40%.

According to an embodiment, the plant 100 is provided with a control station 300, which is arranged along the delivery conduit line 10, downstream of the treatment station 50. This control station 300 comprises an absolute humidity meter 301 and/or a temperature detector 302, respectively, configured to measure the absolute humidity and temperature of the treated effluent flow F_{T} exiting the scrubbing tower treatment station 60.

According to this configuration, the plant 100 comprises a control unit 90 configured to receive at least from the absolute humidity meter the values measured by it and process them to adjust various process parameters accordingly, such as, for example, the flow rate of the hot heating water used in the post-heating step, and/or the flow rate of the effluent F entering the plant. Having described the structure of the plant 100, a method 900 for treating an aeriform effluent according to an embodiment of the present invention is now described.

The method 900 according to the present invention provides for conveying (block 901) a flow of aeriform effluent F from a combustion station 20 into a cooling station 40 trough a delivery conduit line 10.

The method 900 therefore involves a cooling operation (block 902) in said cooling station 40 comprising at least a first heat exchanger 41.

At the end of this cooling operation, the cooled effluent flow F₁ exiting the cooling station 40 has a temperature not exceeding 75°C; preferably between about 40°C and about 70°C.

In particular, the first heat exchanger 41 operates through an aeriform service fluid which is supplied to the first heat exchanger 41 itself at a temperature comprised between 10°C and 40°C, preferably about 20°C.

Preferably, said first cooling operation 902 is conducted at substantially atmospheric pressure.

In addition, the cooling station 40 may, as mentioned, comprise a first condensate separator 42.

According to this configuration, it is possible to remove at least part of the carbon dioxide (CO₂) contained in the effluent being cooled. In fact, the removal process is governed by the phenomena of transport from the gas phase to the liquid phase and the liquid-gas equilibrium of CO₂ and is linked to the solubility of CO₂ in water, which, as is well known, increases with decreasing temperature. Additionally, the plant 100 and method 900 enable condensate formation and recovery for various substances contained in the treated effluent, such as sulphuric, hydrochloric, hydrofluoric, acetic and formic acid as well as sulphur dioxide.

The method 900 therefore comprises performing at least one basification (block 903) of the cooled effluent flow F₁ by means of basifying agents, in a first section 51 of a treatment station 50.

The method 900 further comprises performing at least one oxidation (block 904) of the effluent leaving said first section 51 by means of oxidising agents, in a second section 52 of the treatment station 50, hydraulically independent from the first section 51.

The method 900 therefore comprises performing at least one adsorption operation (block 905) in an adsorption station 200 comprising at least one filter element 201.

The invention thus conceived is susceptible to several modifications and variations, all falling within the scope of protection defined by the appended claims.

For example, the first section 51 is provided in a first scrubbing tower and the second section 52 is provided in a second scrubbing tower, said first and second scrubbing towers being arranged in series.

According to this embodiment, the third inlet 603 is located in an upper portion of the first scrubbing tower (i.e. the tower comprising the first section 51 suitable for carrying out a basification operation), i.e. opposite the position of the storage tank.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. Plant (100) for treating an aeriform effluent comprising:
- a delivery conduit line (10) configured to transport an aeriform effluent (F) coming from at least a combustion station (20) to one or more processing stations arranged in succession;
- at least a cooling station (40) arranged along said delivery conduit line (10) and configured to perform a cooling of the aeriform effluent to a temperature not exceeding 75°C;
- a treatment station (50), arranged along said delivery conduit line (10) downstream of said cooling station (40) and comprising a first section (51) configured to perform a basification of the flow of effluent flowing through it, and a second section (52) arranged downstream of said first section (51) and configured to perform an oxidation of the flow of effluent flowing through it, wherein said first section (51) and said second section (52) are hydraulically independent;
- at least one adsorption station (200) arranged along said delivery conduit line (10), downstream of said treatment station (50), and comprising at least one filter element (201) configured to perform an adsorption on the aeriform effluent flowing through it.

2. Plant (100) for treating an aeriform effluent according to claim 1, wherein said treatment station (50) comprises at least one scrubbing tower (60) provided with at least said first section (51) and comprising:
- at least one first inlet (601) placed in fluid connection with said first section (51), and suitable for the passage of a cooled effluent flow (F₁) coming from the cooling station (40);
- - at least one second inlet (602) apt to feed a flow of water to the internal volume of the scrubbing tower (60);
- at least one first outlet (611) configured to discharge from said scrubbing tower (60) a flow of treated aeriform effluent (F_{T}).

3. Plant (100) for treating an aeriform effluent according to claim 1 or 2, wherein said cooling station (40) comprises at least one first heat exchanger (41) which is provided with an inlet section (41') for inlet of an aeriform service fluid (F_{SA}) having a temperature of 40°C or less.

4. Plant (100) for treating an aeriform effluent according to any one of the preceding claims, wherein said treatment station comprises at least one storage tank (70), arranged internally to said scrubbing tower (60) at a lower portion thereof, said storage tank (70) being placed in fluid connection with a second outlet (612) of the scrubbing tower (60), configured to flow out the liquids collected in the tank (70) and convey them to a recirculation circuit (80).

5. Plant (100) for treating an aeriform effluent according to claim 4, wherein said recirculation circuit (80) is configured to convey a flow comprising the liquids exiting the storage tank (70) and a basifying solution and conveying said flow to the scrubbing tower (60) through a third inlet (603).

6. Plant (100) for treating an aeriform effluent according to claim 4 or 5, wherein a first inlet circuit (91) is configured to connect a first reservoir (91') containing a basifying solution to said recirculation circuit (80).

7. Plant (100) for treating an aeriform effluent according to any one of the preceding claims, wherein said first section (51) and said second section (52) are both provided in a scrubbing tower (60) and are arranged in series with each other, so that the first section (51) is placed before the second section (52), along the path of the effluent within the scrubbing tower (60) itself.

8. Plant (100) for treating an aeriform effluent according to any one of the preceding claims, comprising a Redox potential controller configured to control the amount of oxidising solution fed into the second section (52) through a second inlet circuit (92) to which it is operatively connected.

9. Method (900) for treating an aeriform effluent (F) comprising:
- conveying (901) a flow of aeriform effluent F, into a cooling station (40) through a delivery conduit line (10);
- performing at least one cooling (902) in said cooling station (40) which is configured to obtain a cooled effluent flow (F₁) exiting therefrom, having a temperature not exceeding 75°C;
- performing at least one basification (903) of the cooled effluent flow (F₁), by means of basifying agents in a first section (51) of a treatment station (50);
- performing at least one oxidation (904) of the effluent exiting said first section (51), by means of oxidising agents in a second section (52) of said treatment station (50), said second section (52) being hydraulically independent of the first section (51); and
- performing at least one adsorption (905) in an adsorption station (200) comprising at least one filter element (201).

10. Method according to claim 9, wherein said performing a basification (903) comprises employing a basifying solution comprising potassium hydroxide (KOH) having a volume percentage composition of KOH between 0.5% and 8% by weight, and wherein said performing an oxidation (904) comprises employing an oxidising solution comprising hydrogen peroxide (H₂O₂).
